# EUROPÄISCHE PATENTSCHRIFT

(11) **EP 0 808 438 B1**
(45) Veröffentlichungstag und Bekanntmachung des Hinweises auf die Patenterteilung: **22.11.2000**
(21) Anmeldenummer: 96901786.2
(22) Anmeldetag: 06.02.1996
(51) Int. Cl.: F16L 59/08

(54) **FLÄCHENGEBILDE AUS FOLIE ODER BLECH FÜR DIE VERWENDUNG ALS HITZESCHILD**
FLAT STRUCTURE MADE OF FOIL OR SHEET METAL TO BE USED AS A HEAT SHIELD
STRUCTURE EN NAPPE, EN FILM OU EN TOLE, S'UTILISANT COMME BOUCLIER THERMIQUE

(30) Priorität: 08.02.1995 DE 19504063
(43) Veröffentlichungstag der Anmeldung: 26.11.1997
(73) Patentinhaber: Hecralmat, 9494 Schaan (LI)
(72) Erfinder: PIRCHL, Gerhard, CH-5708 Birrwil (CH)
(74) Vertreter: Riebling, Peter, Dr.-Ing.
(86) Internationale Anmeldenummer: EP9600484
(87) Internationale Veröffentlichungsnummer: WO9624796

(56) Entgegenhaltungen:
- AU-B- 475 800
- DE-A- 2 546 857
- DE-A- 2 549 722
- DE-A- 4 035 177
- FR-A- 2 553 713

## Beschreibung

Die Erfindung betrifft ein Flächengebilde aus einer Folie oder einem Blech für die Verwendung von Hitzeschilden, wie sie beispielsweise zur Wärmeabschirmung zwischen dem Auspufftopf eines Kraftfahrzeuges und einem zugeordneten Kraftfahrzeugboden oder dergleichen verwendet werden. Aus dem DE-GM 91 03 864 ist ein derartiges Hitzeschild bekannt gewoden, welches eine Matte beschreibt, die aus mehreren Lagen von verformter Folie besteht, wobei diese Folienlagen parallel und in gegenseitigem Abstand zueinander angeordnet sind und mit entsprechenden Befestigungseinrichtungen mit einem Blechteil so verbunden sind, daß ein Hitzeschild gebildet wird.

Bei dieser bekannten Matte sind alle Lagen der Folie verformt, um so eine direkte, flächenmäßige Berührung mit der benachbarten Lage zu vermeiden.

Der Wärmeisolationsgrad einer derartigen Matte ist jedoch stark beeinträchtigt, weil aufgrund der Verformung aller Matten ein einfallender Wärmestrahl mehrfach an den Verformungen reflektiert wird und durch Querreflektionen sich die Folienlagen so aufheizen, daß ein relativ ungünstiger Wärmeisolationsgrad nur erreichbar ist.

Außerdem wird es als nachteilig angesehen, mehrere Mattenlagen verwenden zu müssen, um eine derartige Isolationswirkung zu erzielen.

Es wird demgemäß angestrebt, den gleichen oder einen verbesserten Wärmeisolationsgrad mit mindestens einer einzigen Mattenlage zu erzielen.

Die DE-A-25 46 857 beschreibt eine Einrichtung zum Schutz von Aufenthaltsräumen, insbesondere in Kraftwagen gegen übermäßige Erwärmung durch Sonneneinstrahlung in Form eines Reflektors, wobei auf der Außenfläche der vor den Sonnenstrahlen zu schützende Raumwandung diese Reflektoren durch lösbare Haftmittel befestigt sind. Der Reflektor selbst kann mit einer spiegelnden Folie zusätzlich versehen sein und über dieser spiegelnden Flächenvorsprünge in Form von Rippen angebracht sein, welche eine nicht reflektierende Oberfläche aufweisen. Durch diese Rippen wird eine blendfreie Spiegelung der einfallenden Sonnenstrahlen erzielt, da die in Blendrichtung reflektierenden Sonnenstrahlen durch diese Vorsprünge aufgefangen werden.

Hierbei sind die Rippen lediglich auf einer Seite des Reflektors angebracht, so daß die Querstrahlung lediglich auf einer Seite des Reflektors unterdrückt wird. Auch können sich hierbei die zwischen den Rippen liegenden glatten Reflektorteile beim Aufbringen auf die zu schützende Raumwandung verformen, so daß dort wiederum Streustrahlung erzeugt wird. Diese Streustrahlung wäre aber beispielsweise beim Einsatz der Reflektorfolie als Wärmeabschirmung zwischen einem Auspufftopf eines Kraftfahrzeuges und einem zugeordneten Kraftfahrzeugboden, wie bei der Erfindung, störend, da durch diese Querstrahlung der Reflektor sich unerwünscht aufheizt, so daß nur ein ungünstiger Wärmeisolationsgrad erreicht werden kann. Somit ist der Einsatzbereich des Reflektors der DE-A-25 46 857 darauf beschränkt, daß die Wärmequelle außerhalb des vor der Wärme zu schützenden Raums liegt und nicht, wie bei der vorliegenden Erfindung, der zu schützende Raum außerhalb einer wärmeproduzierenden Quelle liegt. Die DE-A-25 46 857 beschreibt denAnwendungsfall des Reflektors auf einem Kraftfahrzeug-Dach, wodurch der Innenraum dieses Kraftfahrzeuges vor der Sonneneinstrahlung geschützt werden soll.

Demgemäß hat die vorliegende Erfindung die Aufgabe, ein derartiges Flächengebilde so weiterzubilden, daß mit wesentlich geringerem Aufwand ein hochwirksames Hitzeschild gebildet werden kann.

Zur Lösung der gestellten Aufgabe ist die Erfindung durch die technische Lehre des Anspruches 1 gekennzeichnet.

Wesentliches Merkmal der vorliegenden Erfindung ist nun, daß die verformten Flächenbereiche zu beiden Seiten aus der Ebene der glatten Fläche heraus verformt und zumindestens die unverformten Flächenbereiche stark wärmestrahlungsreflektierend ausgebildet sind, wobei das Flächengebilde gebogen ist, damit eine abzuschirmende Wärmequelle teilweise umschlossen werden kann, und die Biegung nur in den verformten Flächenbereichen stattfindet.

Ein Flächengebilde nach der vorliegenden Erfindung besteht bevorzugt aus einer Folie oder einem Blech, wobei die Folie eine Dicke bis 0,4 mm aufweist und das Blech, welches gleichfalls verwendet werden kann, eine Dicke über 0,4 mm aufweist.

Es wird selbstverständlich vom Erfindungsgedanken der vorliegenden Erfindung umfaßt, wenn man mehrere parallele verformte Flächengebilde aufeinanderlegt, so wie dies beim älteren DE-GM beschrieben wurde oder wenn man auch Foliengebilde mit Blechgebilden miteinander kombiniert.

Aus Vereinfachungsgründen wird in der folgenden Beschreibung lediglich die Verformung eines einzelnen Flächengebildes beschrieben, welches entweder als Folie oder als Blech ausgebildet sein kann, obwohl - siehe oben - auch mehrere parallele Flächengebilde vorhanden sein können.

Erfindungsgemäß wir das Flächengebilde dreidimensional so verformt, daß sich verformte Bereiche bilden, die aus der Ebene des unverformten Flächengebildes herausragenden, verformten Flächen gerade Strahlungsflächen bilden, die ihrerseits möglichst unverformt sind und günstige Reflektionseigenschaften aufweisen.

Der Kern der vorliegenden Erfindung liegt also darin, daß man zum Zwecke der Herstellung eines derartigen Hitzeschildes mindestens ein verformtes Flächengebilde nimmt, und in diesem Flächengebilde verformte Flächen schafft, die aus der Ebene der unverformten Fläche herausragen, wobei diese herausragenden Flächen als Reflexions- oder Spiegelflächen ausgebildet sein sollen.

Diese Oberflächen sollen also optimale Reflexionseigenschaften ausweisen und so einen einfallenden Wärmestrahl in möglichst die gleiche Richtung zurückreflektieren.

Die dazwischenliegenden, verformten Bereiche dienen lediglich dazu, daß man dieses Flächengebilde dreidimensional verformen kann, ohne daß hierbei die geraden, unverformten Bereiche selbst verformt und verbogen werden. Es sollen also die Spiegeleigenschaften der aus der Fläche herausragenden Flächen möglichst aufrecht erhalten und beibehalten werden, während die anderen Bereiche absichtlich und kontrolliert und gesteuert verformt werden sollen, um so eine dreidimensionale Verformung dieses Flächengebildes zwecks Herstellung eines Hitzeschildes zu ermöglichen. Es werden also sozusagen durch die Anbringung verformter Flächen Soll-Biegelinien und Soll- Biegeflächen geschaffen, die eine kontrollierte Verbiegung dieses Flächengebildes nur in diesem Bereich gestatten, während die außerhalb liegenden Bereiche unverformt sein müssen und optimale Reflexionseigenschaften aufweisen sollen.

Hierbei ist es wichtig, daß die dreidimensionale Verbiegung dieses Flächengebildes in Richtung zur Wärmequelle so gestalten wird, daß die sich im Bereich der verformten Flächen bildenden Rillen beim Verformen des Flächengebildes schließen, um so eine möglichst große unverformte Reflexionsfläche der Wärmequelle darbieten zu können.

Die verformten Flächen sollen also in Richtung zur Wärmequelle möglichst klein gehalten werden, während die unverformten Reflektionsflächen möglichst groß ausgebildet sein sollen.

Es werden hierbei verschiedene Ausführungsformen zur Herstellung eines derartigen Flächengebildes beschrieben. Hierbei kann es vorgesehen sein, daß die Spiegel- oder Reflektionsfläche etwa rechteckförmig aus der unverformten Folie oder dem umverformten Blech herausverformt werden, ebenso ist es möglich, statt der rechteckförmigen Flächen auch Sechseckflächen, ellipsoide Flächen, runde Flächen, ovale Flächen, Quadratflächen, riffelförmige Flächen und dergleichen mehr heraus zu verformen, immer mit dem Ziel, die aus der Ebene heraus verformten Flächen möglichst mit einer glatten unverformten Oberfläche zu gestalten, um so optimale Reflektionseigenschaften zu schaffen.

Hierbei wird es vom Erfindungsgedanken der vorliegenden Erfindung umfaßt, wenn die Verformung aus der Ebene der unverformten Folie oder dem unverformten Blech auf beiden Seiten (Vorderseite und Rückseite) vorgesehen ist, um so ein von beiden Seiten herausverformtes Flächengebilde zu schaffen.

Wichtig ist jedenfalls, daß mit der gesteuerten Anbringung von verformten Flächen Sollbiegeflächen geschaffen werden, in deren Bereich das Flächengebilde gesteuert gebogen werden kann, während die übrigen, verformten Bereiche ihre optimale Reflektionseigenschaften aufrecht erhalten sollen.

Ein derartiges Folien- oder Blechgebilde besteht vorzugsweise aus ein Aluminiumblech oder Folie, es kann aber auch aus galvanisiertem oder aluminisiertem Stahlblech bestehen und auch aus Kunststoff, welches entsprechend beschichtet ist, mit entsprechenden Beschichtungsflächen, die die gewünschten Reflektionseigenschaften aufweisen.

Wie oben angegeben, kann das Flächengebilde nicht nur ein einschichtiges Gebilde sein, sondern es kann aus mehreren Schalen bestehen, die parallel zueinander in der Art einer Matte übereinander gelegt sind.

Im übrigen besteht der Vorteil bei der Verwendung eines einschichtigen oder auch eines mehrschichtigen Flächengebildes, daß eine optimale Schalldämmeigenschaft erreicht wird, denn durch die Anbringung gesteuerter Biegebereiche wird Schall geschluckt und das Schwingungsverhalten wird entscheidend gedämpft.

Der Erfindungsgegenstand der vorliegenden Erfindung ergibt sich nicht nur aus dem Gegenstand der einzelnen Patentansprüche, sonder auch aus der Kombination der einzelnen Patentansprüche untereinander.

Im folgenden wird die Erfindung anhand von mehrere Ausführungswege darstellenden Zeichnungen näher erläutert. Hierbei gehen aus den Zeichnungen und ihrer Beschreibung Merkmale und Vorteile der Erfindung hervor.

Es zeigen:
- Figur 1:: Schnitt durch ein Flächengebilde in einer ersten Ausführungsform nach der Erfindung;
- Figur 2:: einen vergrößerten Schnitt durch ein Flächengebilde nach Figur 1 in verformtem Zustand;
- Figur 3:: die Draufsicht auf verschiedene Ausführungsformen des Flächengebildes nach Figur 3 in Richtung des Pfeiles III in Figur 1;
- Figur 4:: vergrößerte Darstellung im Schnitt durch ein verformtes Flächengebilde in der Art nach Figur 2;
- Figur 5:: Schnitt durch eine weitere Ausführungsform eines Flächengebildes;
- Figur 6:: Draufsicht auf das Flächengebilde nach Figur 5;

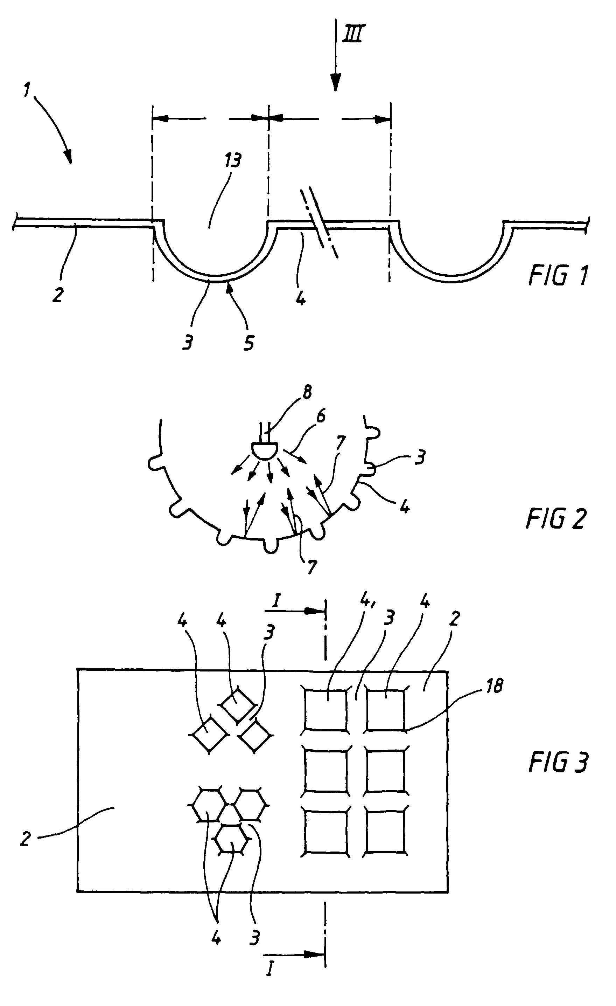

In Figur 1 besteht ein Flächengebilde 1 aus unverformten, glatten Flächen 2 und aus verformten Flächen 3, die zwischen sich auch glatte, nicht verformte Zwischenbereiche 4 ausbilden.

Im gezeigten Ausführungsbeispiel bilden die verformten Flächen 3 Radiusflächen 5, die aus der Ebene der unverformten Flächen 2 herausragen.

Die Figur 2 zeigt schematisiert eine Anwendung eines derartigen Flächengebildes 1, wobei eine Wärmequelle 8 in den Pfeilrichtungen 6 Wärmestrahlen aussendet, die in den Pfeilrichtungen 7 an den glatten Zwischenbereichen 4 zurückreflektiert werden.

In Figur 3 sind verschiedene Ausführungsformen dargestellt, wobei erkennbar ist, daß die Zwischenbereiche 4 in der Ebene der unverformten Flächen 2 liegen (wenn man in Pfeilrichtung III auf die Figur 1 sieht) und die verformten Flächen 2 sind dann aus der Ebene der Fläche 2 zurückspringend.

Die Zwischenbereiche 4 bilden die vorher erwähnten großflächigen, unverformten und glatten Reflektionsflächen, die in optimierter Weise die Wärmestrahlen in den Pfeilrichtungen 7 auf die Wärmequelle 8 zurückreflektieren sollen.

Die Figur 3 zeigt im übrigen, daß die unverformten Zwischenbereiche 4 auch rautenförmig oder quadratförmig vorgesehen werden können, wobei verformte Zwischenbereiche 3 vorhanden sind und ebenso können auch sechseckförmige Zwischenbereiche 4 vorgesehen werden, zwischen denen verformte Bereiche 3 angeordnet sind.

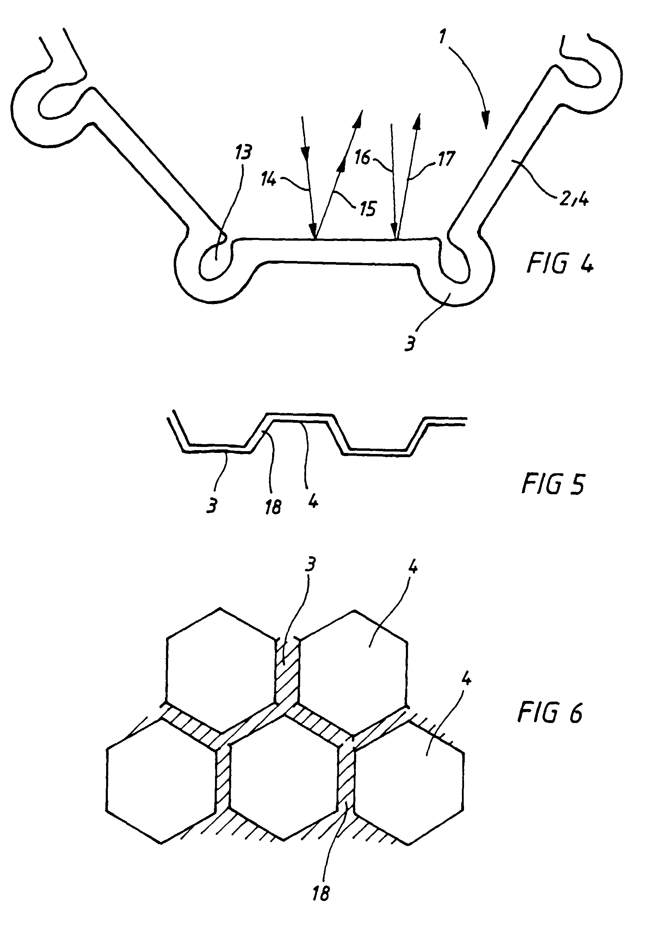

Die Figur 4 zeigt eine vergrößerte Darstellung der Figur 2, wo erkennbar ist, daß die Zwischenbereiche 4, die zwischen den Verformungen 3 liegen, glatte Oberflächen aufweisen, in optimaler Weise einen Wärmestrahl 14 in Pfeilrichtung 15 reflektieren, ebenso wie einen anderen Wärmestrahl 16, der in Form des Wärmestrahls 17 reflektiert wird.

Erkennbar ist im übrigen auch, daß die verformten Flächen 3 praktisch einseitig offene Rillen 13 bilden, die bei einer dreidimensionalen Verformung des Flächengebildes 1 nach Figur 4 sich schließen und damit der Wärmequelle nur geringe, nicht reflektierende Bereiche anbieten.

Die Figur 5 zeigt als weiteres Ausführungsbeispiel eine seckseckförmige Verformung der Fläche, wie sie anhand der Beispiele in Figur 3 dargestellt wurde. Hier ist erkennbar, daß der Wärmequelle entgegengestellte Zwischenbereiche 4 vorhanden sind, die schräg, etwa trapezförmige Übergänge 18 ausbilden.

Dies ist im übrigen in Figur 6 näher dargestellt, wobei man sieht, daß der Wärmequelle zugewandte, glatte Flächen 4 präsentiert sind und dazwischen liegende, möglichst klein gehaltene Flächen 3 vorgesehen sind.

## Patentansprüche

1. Flächengebilde aus Folie oder Blech zur Verwendung als Hitzeschild, wobei das Flächengebilde (1) mindestens einlagig mit einer glatten Fläche (2) ausgebildet ist, die in eine Vielzahl von unverformten, glatten Flächenbereichen (4) und in eine Vielzahl von aus der glatten Fläche (2) heraus verformten Flächenbereichen (3) unterteilt ist, dadurch gekennzeichnet, daß die verformten Flächenbereiche (3) zu beiden Seiten aus der Ebene der glatten Fläche (2) heraus verformt und zumindestens die unverformten Flächenbereiche (4) stark wärmestrahlungsreflektierend ausgebildet sind, wobei das Flächengebilde (1) gebogen ist, damit eine abzuschirmende Wärmequelle (8) teilweise umschlossen werden kann, und die Biegung nur in den verformten Flächenbereichen (3) stattfindet.

2. Flächengebilde nach Anspruch 1, dadurch gekennzeichnet, daß das Flächengebilde (1) aus mehreren parallelen Lagen aus Blech und/oder Folie besteht.

3. Flächengebilde nach Anspruch 1 oder 2, dadurch gekennzeichnet, daß ein oder mehrere Lagen des Flächengebildes (1) aus Folie mit einer Dicke von bis zu 0,4 mm besteht.

4. Flächengebilde nach einem der Ansprüche 1 bis 3, dadurch gekennzeichnet, daß ein oder mehrere Lagen des Flächengebildes (1) aus Blech mit einer Dicke von mindestens 0,4 mm besteht.

## Claims

1. Sheet structure of foil or sheet-metal for use as a heat-shield, in which the sheet structure (1) is formed of at least one layer with a smooth surface (2) which is subdivided into a plurality of unformed, smooth surface areas (4) and a plurality of surface areas (3) formed from the smooth surface (2), characterized in that the formed surface areas (3) are formed on both sides out of the plane of the smooth surface (2) and at least the unformed surface areas (4) are highly reflective of thermal radiation, wherein the sheet structure (1) is bent so that a heat source (8) which is required to be screened can be partly surrounded, and the bending occurs only in the formed surface areas (3).

2. Sheet structure according to Claim 1, characterized in that the sheet structure (1) consists of several parallel layers of sheet-metal and/or foil.

3. Sheet structure according to Claim 1, characterized in that one or more layers of the sheet structure (1) consists of foil with a thickness of up to 0.4 mm.

4. Sheet structure according to any one of Claims 1 to 3, characterized in that one or more layers of the sheet structure (1) consists of sheet-metal with a thickness of at least 0.4 mm.

## Revendications

1. Structure plane composée d'un film ou d'une tôle, à utiliser comme bouclier thermique, cette structure plane (1) étant formée d'au moins une couche, avec une surface lisse (2) qui est divisée en plusieurs zones planes lisses non déformées (4) et en plusieurs zones planes déformées (3) obtenues à partir de la surface lisse (2), caractérisée en ce que les zones planes déformées (3) sont déformées des deux côtés à partir du plan de la surface lisse (2) et les zones non déformées (4), au moins, sont conçues pour réfléchir fortement un rayonnement thermique, la structure plane (1) étant cintrée pour pouvoir entourer partiellement une source de chaleur (8) à couvrir, et le cintrage n'ayant lieu que dans les zones planes déformées (3).

2. Structure plane selon la revendication 1, caractérisé en ce qu'elle se compose de plusieurs couches parallèles formées de tôle et/ou de film.

3. Structure plane selon la revendication 1 ou 2, caractérisée en ce qu'une ou plusieurs couches de la structure plane (1) se composent d'un film d'une épaisseur allant jusqu'à 0,4 mm.

4. Structure plane selon l'une des revendications 1 à 3, caractérisée en ce qu'une ou plusieurs couches de la structure plane (1) se composent d'une tôle d'une épaisseur d'au moins 0,4 mm.
